# FASCICULE DE BREVET EUROPEEN

(11) **EP 3 694 320 B1**
(45) Date de publication et mention de la délivrance du brevet: **13.11.2024**
(21) Numéro de dépôt: 18825758.8
(22) Date de dépôt: 27.11.2018
(51) Int. Cl.: A01M 7/00

(54) **DISPOSITIF DE PULVÉRISATION**
SPRÜHVORRICHTUNG
SPRAYING DEVICE

(30) Priorité: 27.11.2017 FR 1761228
(43) Date de publication de la demande: 19.08.2020
(73) Titulaire: Exel Industries, 75009 Paris (FR)
(72) Inventeur: GODIA, Josep, 75009 Paris (FR)
(74) Mandataire: Argyma
(86) Numéro de dépôt international: PCT/FR2018/053008
(87) Numéro de publication internationale: WO 2019/102171

(56) Documents cités:
- WO-A1-2008/096190
- WO-A1-2008/096190
- FR-A- 1 334 838
- FR-A- 1 334 838
- FR-A1- 2 407 025
- FR-A1- 2 407 025
- FR-A1- 2 785 770
- FR-A1- 2 785 770
- FR-A1- 2 892 893
- FR-A1- 2 892 893
- FR-A1- 2 989 250
- FR-A1- 2 989 250
- FR-B1- 2 785 770
- FR-B1- 2 892 893
- US-A1- 2014 263 732
- US-A1- 2014 263 732

## Description

La présente invention concerne un dispositif de pulvérisation pour machine agricole. Un dispositif de pulvérisation est classiquement utilisé, porté par une machine agricole, tel un tracteur ou une remorque, afin de parcourir une plantation de végétaux, avantageusement en ligne, tel des arbres ou de la vigne, et permettre de pulvériser sur lesdits végétaux un produit phytosanitaire.

Après utilisation, il est préférable de nettoyer le dispositif de pulvérisation, typiquement au jet d'eau sous pression, à l'intérieur comme à l'extérieur, afin de retirer le produit phytosanitaire. Les dispositifs de pulvérisation existants sont généralement peu aisés à nettoyer, particulièrement l'intérieur qui est peu accessible.

Par ailleurs les dispositifs existants sont peu ou difficilement démontables. Ils présentent encore des coûts de fabrication et d'entretien importants dus à des conceptions peu optimisées. Une perturbation importante du flux d'air est généralement observable à la jonction d'une buse et entraîne une perte de puissance pour les buses plus avales. Les dispositifs existants sont conçus pour travailler à une distance unique de la végétation.

Le document WO 2008/096190 A1 divulgue un dispositif selon le préambule de la revendication 1.

La présente invention remédie à ces différents inconvénients en proposant un dispositif dont les buses sont aisément montables et démontables de leur porteur.

L'invention a pour objet un dispositif de pulvérisation pour machine agricole, comprenant un porteur et au moins une buse apte à pulvériser un produit aérosol, le porteur étant creux afin d'être apte à transporter un air propulseur jusqu'à ladite au moins une buse, où ladite au moins une buse est sélectivement montable et démontable du porteur, préférentiellement sans outillage.

Le porteur comprend au moins un trou découpé dans sa paroi et une buse comprend un manchon apte à être engagé dans un trou, une collerette entourant le manchon et apte à recouvrir la périphérie extérieure du trou, et au moins deux ergots débordant radialement du manchon de manière à pouvoir crocheter la périphérie intérieure du trou, préférentiellement opposés relativement au trou.

Un desdits au moins deux ergots est fixe et un autre desdits au moins deux ergots est mobile entre une position crochetée où il peut crocheter la périphérie intérieure du trou et une position escamotée, le changement de position étant réalisable au moyen d'une levier comprenant une manoeuvre préférentiellement disposée à l'extérieur.

Selon une autre caractéristique le manchon comprend une écope faisant face à l'arrivée d'air propulseur et forme un coude entre l'écope et la collerette.

Selon une autre caractéristique le porteur comprend une augmentation de section transverse autour d'un trou.

Selon une autre caractéristique la buse comprend encore un pavillon, disposé dans la continuité du manchon et articulé relativement au manchon, préférentiellement selon un axe horizontal.

Selon une autre caractéristique le pavillon comprend encore au moins un volet articulé de manière à varier l'ouverture du pavillon, chaque volet étant préférentiellement indépendamment réglable, et son axe d'articulation étant encore préférentiellement horizontal.

Selon une autre caractéristique le pavillon comprend deux volets, préférentiellement symétriques.

Selon une autre caractéristique la buse comprend encore un moyen d'obturation réglable.

Selon une autre caractéristique le moyen d'obturation comprend un boisseau rotatif disposé dans le pavillon, préférentiellement cylindrique et encore préférentiellement d'axe vertical.

Selon une autre caractéristique la buse comprend encore un moyen de fixation d'un éclateur dans l'ouverture du pavillon et/ou un moyen de fixation d'un gicleur à côté de l'ouverture du pavillon.

On entend par le vocable « buse » un ensemble configuré pour assurer un mélange d'un produit phytosanitaire avec l'air propulseur pour former un aérosol, cet ensemble étant amovible d'un seul tenant par rapport au porteur.

Afin de réaliser la pulvérisation, un circuit d'air comprenant notamment le porteur creux apporte un air propulseur jusqu'à l'ensemble buse. L'air propulseur entre par une entrée de la buse, la traverse de part en part et ressort par une ouverture en sortie, sous forme d'un jet d'air dirigé vers les végétaux à traiter. La buse assure une fonction de mise en forme du jet d'air et sa distribution vers les végétaux à traiter. Le produit phytosanitaire est dispersé à l'ouverture de sortie de la buse afin d'être porté ou soufflé par le jet d'air dans le feuillage des végétaux à traiter.

D'autres caractéristiques, détails et avantages de l'invention ressortiront plus clairement de la description détaillée donnée ci-après à titre indicatif en relation avec des dessins sur lesquels :
- la figure 1 présente un mode de réalisation d'un porteur nu,
- la figure 2 présente le porteur de la figure 1 équipé de trois buses,
- la figure 3 présente un mode de réalisation d'une buse, en vue perspective arrière, le levier étant fermé,
- la figure 4 présente la buse de la figure 3 selon la même vue perspective arrière, ici partiellement coupée, le levier étant ouvert,
- les figures 5 et 6 présentent la buse de la figure 3, en vue perspective latérale, selon des réglages différents,
- la figure 7 présente la buse de la figure 3, en vue perspective de face,
- la figure 8 présente un éclaté de la buse de la figure 3,
- la figure 9 présente la buse de la figure 3, en vue perspective coupée longitudinale droite, le boisseau étant ouvert,
- la figure 10 présente la buse de la figure 3, en vue perspective coupée longitudinale gauche, le boisseau étant fermé,
- les figures 11 et 12 présentent la buse de la figure 3, en vue perspective selon deux points de vue, équipée d'un éclateur,
- la figure 13 présente la buse de la figure 3, en vue perspective, équipée d'un gicleur,
- la figure 14 présente une vis de fermeture de la buse permettant la fermeture, notamment manuelle, de l'arrivée de liquide à pulvériser,
- les figures 15A et 15B présentent un bloc support d'une buse munie d'une vis telle qu'illustrée sur la figure 14.

Un dispositif de pulvérisation pour machine agricole est mobile, en ce qu'il est embarqué sur un tracteur ou une remorque, afin de parcourir une plantation de végétaux, tels des arbres ou de la vigne, avantageusement disposés en ligne, et pulvériser un produit phytosanitaire sur lesdits végétaux pour les traiter. Afin d'être pulvérisé le produit sanitaire, typiquement liquide, est apporté jusqu'à une buse 2, encore dénommée diffuseur, par une première circuiterie 13 dédiée. Afin de réaliser effectivement la pulvérisation, un air propulseur est encore apporté à la buse 2. L'air propulseur est typiquement mis sous pression par une turbine embarquée. Il est ensuite transporté par une deuxième circuiterie.

Une buse 2 est le dernier maillon de cette deuxième circuiterie. L'air propulseur traverse la buse 2 de part en part. La buse 2 assure une fonction de mélange du produit phytosanitaire avec l'air propulseur pour former un aérosol, typiquement en sortie de buse 2, et une fonction de distribution dirigée de l'air propulseur/l'aérosol vers les végétaux à traiter.

La buse forme donc un ensemble amovible d'un seul tenant de la paroi qui la porte et formant le dernier maillon des première 13 et deuxième circuiterie, la buse étant configurée pour assurer ce mélange du produit phytosanitaire avec l'air propulseur pour former un aérosol. Une telle buse ou ensemble buse ou bloc buse forme donc un même ensemble intégrant à la fois l'éjection de l'air propulseur et la délivrance du produit phytosanitaire à l'air propulseur. Ces deux derniers maillons des première 13 et deuxième circuiteries sont donc combinés ensembles pour être manipulés d'un seul tenant par l'utilisateur en manipulant la buse 2 qui les intègre.

Une buse 2 est montée sur un porteur 1 de buse. Un porteur 1, encore nommé bras, colonne ou descente, peut prendre différentes formes et accueillir une ou plusieurs buses 2. Il est le plus souvent vertical, descendant en ce qu'il est suspendu sous une structure portée par la machine agricole. Le dispositif de pulvérisation complet peut comprendre plusieurs tels porteurs 1.

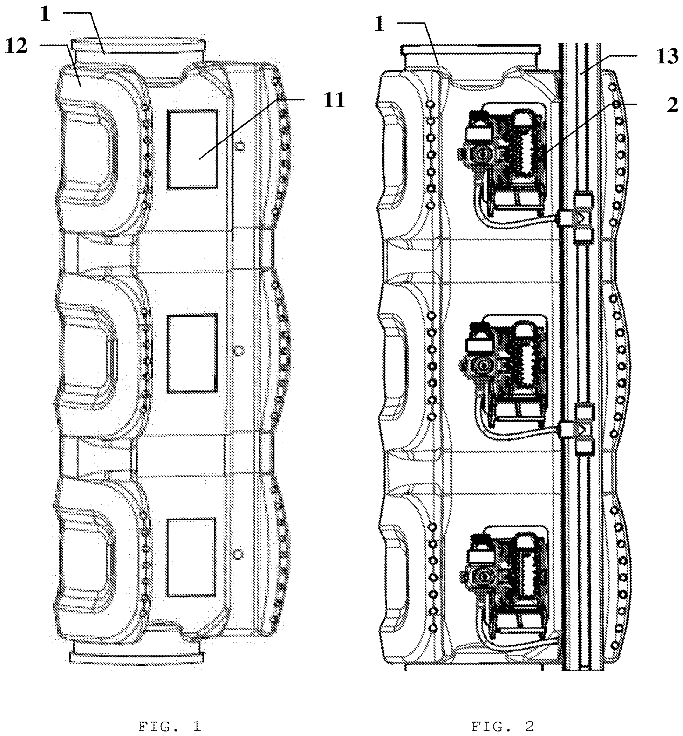

La figure 1 illustre un mode de réalisation possible d'un porteur 1 apte à accueillir trois buses 2. Selon une caractéristique de l'invention, le porteur 1, en plus de sa fonction de support de la ou des buses 2, est avantageusement creux. Ainsi il constitue l'avant-dernier maillon de la deuxième circuiterie et permet le transport de l'air propulseur jusqu'aux buses 2. Selon un possible mode de réalisation, l'air propulseur arrive par le haut du porteur 1.

La figure 2 illustre le porteur 1 de la figure 1 équipé de trois buses 2.

Selon une caractéristique de l'invention, une buse 2 est sélectivement montable et démontable du porteur 1. Afin de faciliter le travail sur le terrain, ces opérations de montage et/ou démontage sont avantageusement réalisables sans outillage.

Pour cela, le porteur 1 comprend un trou 11 à chaque poste prévu pour accueillir une buse 2. Ce trou 11 est découpé dans la paroi du porteur 1, avantageusement mince ou amincie au niveau du trou 11. La forme d'un trou 11 peut être quelconque, par exemple circulaire. Une forme non circulaire, par exemple rectangulaire, telle qu'illustrée, est avantageuse en ce qu'elle permet d'indexer la buse 2 en rotation autour de son axe. Une forme dissymétrique (non représentée) est encore avantageuse en ce qu'elle permet de réaliser un détrompage imposant une orientation unique de la buse 2 sans possibilité d'erreur de montage.

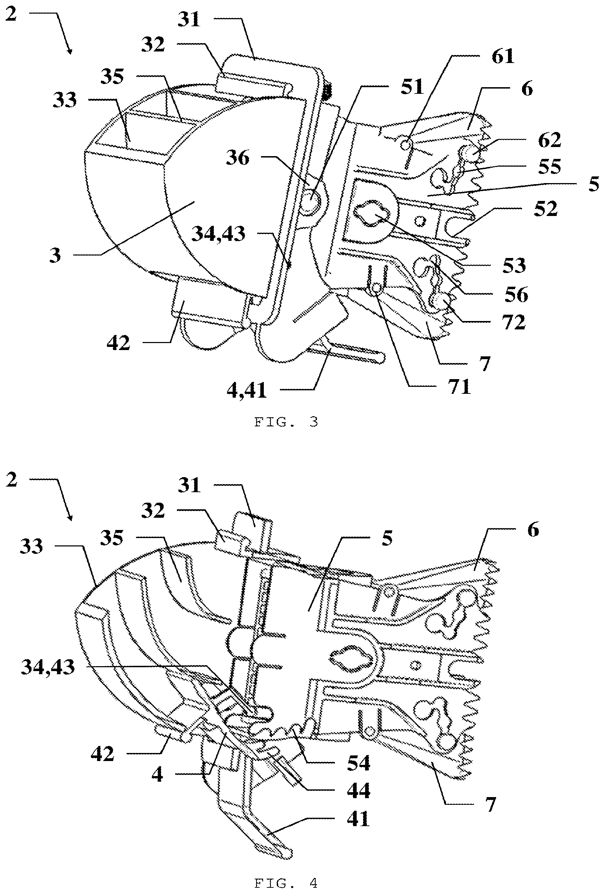

Tel qu'illustrée aux figures 3-13, une buse 2 est conformée pour s'adapter au porteur 1 au niveau d'un trou 11. Tel que plus particulièrement visible aux figures 3 et 4, une buse 2 comprend un manchon 3 apte à être engagé dans un trou 11. Pour cela l'extrémité du manchon 3 présente une section de forme inscrite dans la forme d'un trou 11.

Le manchon 3 comprend une collerette 31 entourant le manchon 3 et apte à recouvrir la périphérie extérieure du trou 11. On entend ici par extérieure la surface externe du porteur 1. Ainsi la buse 2, en place dans le trou 11, obture le trou 11 et oblige l'air propulseur à passer dans la canalisation principale que forme la buse 2. La collerette 31 sert encore de butée en ce qu'elle limite l'enfoncement en profondeur de la buse 2 dans le porteur 1. La collerette 31 présente avantageusement dans son plan, une forme adaptée de manière à épouser la surface extérieure du porteur 1 au niveau du trou 11. Ces deux surfaces sont avantageusement planes.

Afin de fixer la buse 2 sur le porteur 1, la buse 2 comprend encore deux ergots 32, 42 débordant radialement du manchon 3. Ainsi ces ergots 32, 42 peuvent crocheter la périphérie intérieure du trou 11. On entend ici par intérieure la surface interne du porteur 1. La buse 2 est ainsi maintenue en ce qu'elle butte contre l'extérieur du trou 11 par la collerette 31 et contre l'intérieur du trou 11 par les ergots 32, 42. Afin d'équilibrer, ces au moins deux ergots 32, 42 sont préférentiellement diamétralement opposés, de part et d'autre du manchon 3.

Au moins un ergot peut être élastiquement escamotable : un moyen de rappel élastique tend à le placer en position crochetée ou sortie, un contact par exemple avec le bord du trou 11 réalise son escamotage, avantageusement sous réserve d'un effort suffisant.

Selon l'invention, particulièrement illustré aux figures 3 et 4, un desdits au moins deux ergots 32 est fixe et un autre desdits au moins deux ergots 42 est mobile entre une position crochetée où il peut crocheter la périphérie intérieure du trou 11 et une position escamotée.

Il ainsi possible en engageant la buse 2 dans le trou 11 du côté de l'ergot fixe, ici l'ergot supérieur 32, de glisser ce dernier derrière la paroi du trou 11. L'ergot mobile, ici l'ergot inférieur 42 étant escamoté, tel qu'illustré à la figure 4, ne gêne pas pour terminer la mise en place de la buse 2 en engageant dans le trou 11 la buse 2 du côté de l'ergot mobile 42. Ensuite, l'ergot mobile 42 est déplacé en position verrouillée, tel qu'illustré à la figure 3. Dans cette position l'ergot mobile 42 vient crocheter la surface du trou 11 par l'intérieur et assure le verrouillage de la buse 2 dans le trou 11.

Selon l'invention, le changement de position de l'ergot mobile 42 est rendu possible par un levier 4. Ce levier 4 est articulé relativement au manchon 3 par un axe 43 placé dans un logement 34. L'ergot 42 est de matière avec le levier 4 dont la rotation permet le changement de position. Le levier 4 comprend encore une manoeuvre 41 disposée à l'extérieur, afin de pouvoir être aisément manipulé. L'extérieur s'entend ici relativement au porteur 1 lorsque la buse 2 est en place dans le trou 11. La figure 3 présente le levier 4 en position ouverte ou déverrouillée, l'ergot 42 étant escamoté principalement dans le manchon 3. La figure 4 présente le levier 4 en position fermée ou verrouillée, l'ergot mobile 42 étant déployé de manière à venir crocheter la paroi intérieure du porteur 1 entre l'ergot 42 et la collerette 31.

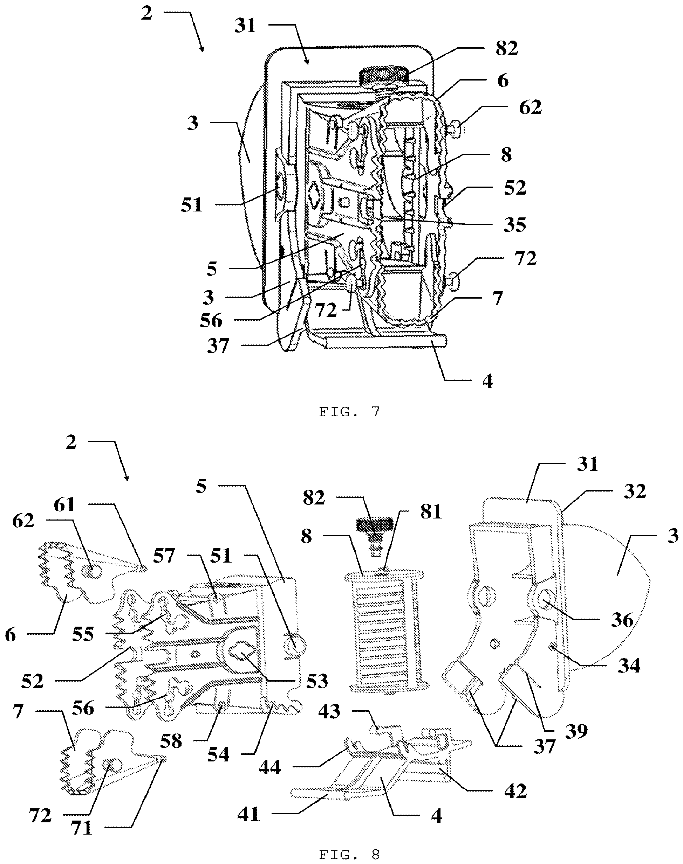

Selon une autre caractéristique, plus particulièrement visible aux figures 7 et 8, une, avantageusement double, protubérance 37 est disposée sur le manchon 3 afin de réaliser un maintien en position fermée du levier 4. Cette protubérance 37 est avantageusement conique. Ainsi la partie inclinée favorise un escamotage de la protubérance 37 et le passage en position fermée, tandis que la partie perpendiculaire retient ensuite le levier 4. Le mouvement du levier 4 reste cependant possible dans les deux sens de par la flexibilité de la lame supportant la protubérance 37 et permettant son escamotage. Cette flexibilité est améliorée par la découpe 39 proche. Un effort plus important est nécessaire pour quitter la position fermée.

Selon une autre caractéristique importante, plus particulièrement visible aux figures 3 et 4, le manchon 3 comprend une écope 33 faisant face à l'arrivée d'air propulseur, lorsque la buse 2 est en place dans le porteur 1, et un coude entre l'écope 33 et la collerette 31. Une première fonction de la buse 2 est de recevoir l'air propulseur du porteur 1. Pour cela, la buse 2 se connecte au porteur 1 et plonge l'extrémité du manchon 3, soit une écope 33, directement dans la veine d'air propulseur afin de capter une partie de l'air propulseur circulant dans le porteur 1. La direction du porteur 1 est sensiblement verticale. Aussi l'air propulseur arrive depuis une direction sensiblement verticale, le plus souvent descendante. L'axe de diffusion de la buse 2 est sensiblement horizontal. Afin de limiter les pertes de charge lors du changement de direction, le manchon 3 présente une forme coudée entre l'écope 33 et la collerette 31. Ce coude permet d'orienter l'écope 33 formant l'entrée du manchon 3 face à la direction d'approvisionnement et de guider l'air propulseur en l'aidant à changer de direction en douceur.

Afin d'équilibrer les circulations d'air propulseur, le manchon 3 peut comprendre des parois intermédiaires 35, avantageusement coudées, elles aussi, préférentiellement parallèlement au coude. Pour la même raison, les ouvertures de l'écope 33 peuvent présenter des formes en entonnoir. Les surfaces des ouvertures de l'écope 33 peuvent être différentes, par exemple croissantes de haut en bas afin de compenser les longueurs de trajet croissantes de haut en bas.

Avantageusement la présence d'une écope 33 et d'un coude permet de réaliser une interpénétration utile de la buse 2 dans le porteur 1. Ainsi pour une même longueur de chemin horizontal de l'air propulseur, nécessaire pour une bonne dirigeabilité, la profondeur, selon l'axe de la buse 2, du dispositif comprenant le porteur 1 et la buse 2 peut être sensiblement réduite.

Munie de son écope 33, la buse 2 capte une partie de l'air propulseur circulant dans le porteur 1. Afin d'éviter qu'une buse 2 placée en amont ne perturbe trop le flux d'air propulseur pour les buses situées plus en aval, ou ne prélève une quantité trop importante d'air, selon une autre caractéristique, le porteur 1 est conformé, tel qu'illustré à la figure 1, de manière à présenter une augmentation 12 de section transverse au niveau d'un trou 11. Ainsi conformé pour présenter une « bulle » autour d'une buse 2 et de son écope 33, le porteur 1 favorise un bon écoulement de l'air propulseur et garantit qu'une buse 2 plus avale, y compris la dernière, reçoive de l'air propulseur en quantité suffisante.

Il a été vu que le manchon 3 assure l'interface avec le porteur 1 et l'entrée de l'air propulseur dans la buse 2. Une autre fonction de la buse 2 est la diffusion de l'air propulseur en direction de la cible, typiquement végétale. Pour cela la buse 2 comprend encore un pavillon 5. Ce pavillon 5 est disposé dans le prolongement du manchon 3 et en continuité fluidique avec le manchon 3 afin de diffuser l'air capté par le manchon 3.

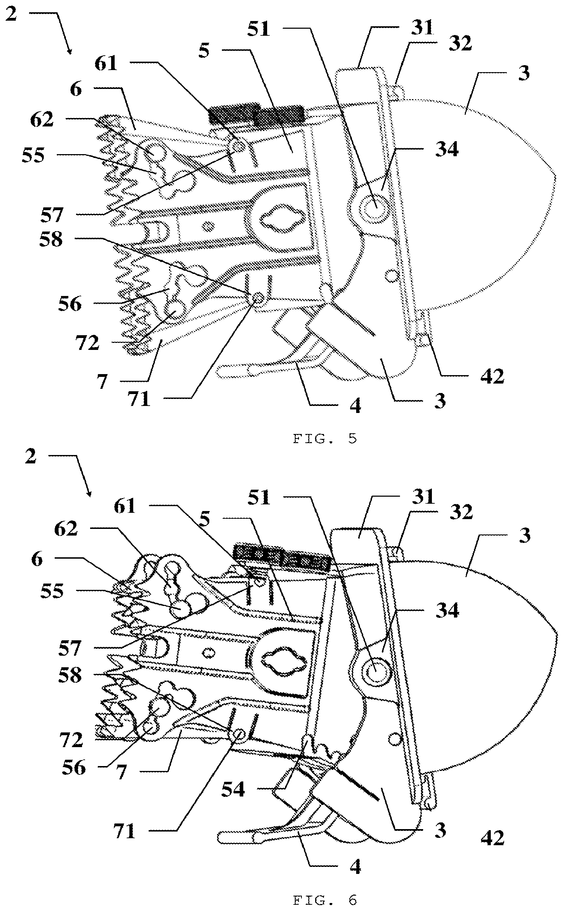

Selon une autre caractéristique, le pavillon 5 est articulé relativement au manchon 3 au moyen d'un axe 51, préférentiellement horizontal. Cette caractéristique, plus particulièrement illustrée aux figures 5 et 6, permet de globalement diriger le flux d'air plus haut ou plus bas. Elle est, selon un mode de réalisation, obtenue par un axe d'articulation 51 solidaire du pavillon 5 et apte à être engagé dans un logement 34 circulaire pratiqué dans le manchon 3. La figure 5 illustre un pavillon 5 orienté sensiblement perpendiculaire au manchon 3, soit sensiblement horizontal lorsque la collerette 31 du manchon 3 est disposée verticalement. Comparativement, la figure 6 illustre la même buse 2 avec un pavillon 5 orienté vers le haut. Le modèle représenté sur les figures permet ainsi une orientation du pavillon 5 relativement au manchon 3 selon une amplitude angulaire par exemple de -30° à +30°C.

Cette caractéristique est avantageusement complétée par un moyen de blocage 44, 54 en position angulaire, afin que le réglage résiste aux secousses. Par ailleurs, une telle caractéristique permet d'orienter manuellement les pavillons des buses de la manière désirée en fonction des végétaux à traiter et en fonction d'éventuels paramètres tels que le feuillage des végétaux,

Selon un mode de réalisation (non représenté) le réglage peut se faire en continu, avec un moyen de blocage, tel une vis de blocage.

Selon un autre mode de réalisation illustré sur les figures, le réglage s'effectue selon plusieurs, ici trois orientations discrètes : haute, médiane et basse. Le moyen de blocage peut alors être réalisé par des indentations 54 pratiquées, par exemple, dans le pavillon 5 et engagées par un ou plusieurs doigt(s) de blocage 44 solidaire du manchon 3.

Ici, selon un mode de réalisation préférentiel, le doigt 44 est solidaire du levier 4 et est double, c'est-à-dire qu'il comprend deux excroissances, chacune venant coopérer dans l'une des encoches 54 prévues à cet effet, ici au nombre de quatre. Ainsi, tel que plus particulièrement visible aux figures 4 et 8, le levier 4 en position ouverte autorise la rotation du pavillon 5 relativement au manchon 3. Au contraire, le levier 4 en position fermée, engage le doigt 44 dans l'une des encoches 54 et bloque la rotation du pavillon 5 relativement au manchon 3. De façon générale, les nombres d'excroissances et d'encoches peuvent varier, étant entendu que le nombre d'encoches 54 est strictement supérieur au nombre d'excroissances, le nombre des positions définissant les orientations discrètes variant en fonction des combinaisons de coopération possibles entre les excroissances du doigt de blocage 44 et les encoches 54.

Selon une autre caractéristique importante, le pavillon 5 comprend encore au moins un volet 6, 7 articulé, relativement au pavillon 5. Ce au moins un volet 6, 7 est conformé et disposé de manière à varier l'ouverture du pavillon 5 et l'angle d'ouverture du jet pulvérisé.

Cette caractéristique est avantageuse en ce qu'un pavillon 5 plus ouvert permet de pulvériser à plus courte distance, pour des végétaux plus proches. Au contraire un pavillon 5 plus fermé permet de pulvériser à plus grande distance, pour des végétaux plus éloignés.

Chaque volet 6, 7 est préférentiellement réglable indépendamment. L'axe d'articulation 61, 71 d'un volet est préférentiellement horizontal. Comme précédemment le réglage peut être continu ou selon des positions discrètes. Un moyen de blocage en position est avantageusement utilisé pour permettre au réglage de résister aux secousses.

Dans le mode de réalisation illustré, le pavillon 5 comprend deux volets 6, 7, préférentiellement symétriques, l'un de l'autre, disposés en partie haute et en partie basse du pavillon 5.

Le volet 6 est articulé autour de l'axe 61 qui vient se placer dans le logement 57. Le moyen de blocage comprend une paire de tenons 62 symétriques, côté volet 6, qui viennent chacun s'engager dans une paire de rainures correspondantes 55, côté pavillon 5. La rainure 55 présente une forme allongée circulaire afin de suivre le tenon 62. Elle présente une largeur faible, s'élargissant au niveau de trois positions présentant un élargissement circulaire et autorisant trois positions de réglage/blocage du volet 6. Un tenon 62 présentent trois diamètres, de la base à la tête : un premier diamètre correspondant aux élargissement circulaire, un deuxième diamètre plus faible correspondant à la largeur faible de la rainure 55 et un troisième diamètre plus important que les deux autres formant une tête. La tête empêche le tenon 62 de sortir de la rainure 55, en fonctionnement. Le premier diamètre est celui qui s'aligne, en profondeur, avec la rainure 55 lorsque le volet 6 est au repos et permet en se logeant dans un élargissement circulaire de bloquer le mouvement du tenon 62 dans une des positions de blocage. Le deuxième diamètre est celui qui s'aligne, en profondeur, avec la rainure 55 lorsque le volet 6 est déformé en appuyant sur les deux tenons 62 d'une paire, permettant ainsi aux tenons 62 de se déplacer le long de leur rainure 55 et avec eux le volet 6. Lorsque l'appui sur les tenons 62 est relâché le volet 6 revient à une position de repos et peut se bloquer lorsque le premier diamètre rencontre une position de blocage.

Selon une autre caractéristique, la rainure 55 présente encore un trou d'un diamètre plus grand que les élargissements circulaires, correspondant au diamètre de la tête du tenon 62. Ce trou permet le passage de la tête du tenon 62 dans la rainure 55 lors d'un montage/démontage du volet 6 avec le pavillon 5.

De manière similaire, le volet 7 est articulé autour de l'axe 71 qui vient se placer dans le logement 58. Le moyen de blocage comprend une paire de tenons 72 symétriques côté volet 6 qui viennent chacun s'engager dans une paire de rainures correspondantes 56 côté pavillon 5.

Chacun des volet 6, 7 peut ainsi, indépendamment, être dans une position ouverte, médiane ou fermée. La figure 5 illustre les volets 6 ,7 tous deux en position ouverte. La figure 6 illustre le volet supérieur 6 en position fermée et le volet inférieur 7 en position médiane.

Les volets 6, 7 permettent de varier la taille de l'ouverture du simple, les deux volets fermés, au double, les deux volets ouverts.

Selon une autre caractéristique importante, la buse 2 comprend encore un moyen d'obturation 8 réglable. Comme il a été décrit, la buse 2 constitue globalement une conduite d'air. Afin d'équilibrer les débits entre différentes buses d'un même porteur 1 il est avantageux de pouvoir obturer partiellement ou totalement une ou plusieurs buses 2. En fonction de la configuration des végétaux, plus ou moins haut, il peut être utile de condamner une buse 2. Aussi il est avantageux de pouvoir obturer totalement une buse 2.

Ces possibilités de réglage apportent une versatilité au dispositif 1 qui peut ainsi traiter différentes configurations de végétaux, basse, haute, etc., avec le même dispositif 1. Selon l'art antérieur, il est connu de stopper l'alimentation en produit phytosanitaire d'une buse non utilisée. Cependant cette buse continue de diffuser de l'air. Une fermeture de l'air par une obturation de la buse 2, permet d'éviter une perte de pression et de récupérer cet air pour les autres buses 2 ou d'économiser de l'énergie en réduisant la puissance de la turbine produisant l'air propulseur.

Pour cela, selon un mode de réalisation, le moyen d'obturation comprend un boisseau rotatif 8 disposé dans la buse 2. Le boisseau 8 peut être disposé dans le manchon 3 ou préférentiellement, tel qu'illustré, dans le pavillon 5. Ce boisseau 8 est préférentiellement cylindrique pour s'adapter et obturer une section rectangulaire du pavillon 5. Le boisseau 8 peut alternativement être sphérique pour s'adapter et obturer une section circulaire du pavillon 5. L'axe 81 de rotation du boisseau 8 peut être quelconque. Une disposition préférentielle verticale permet avantageusement d'avoir le moyen de réglage/blocage 82 au-dessus, respectivement en dessous de la buse 2.

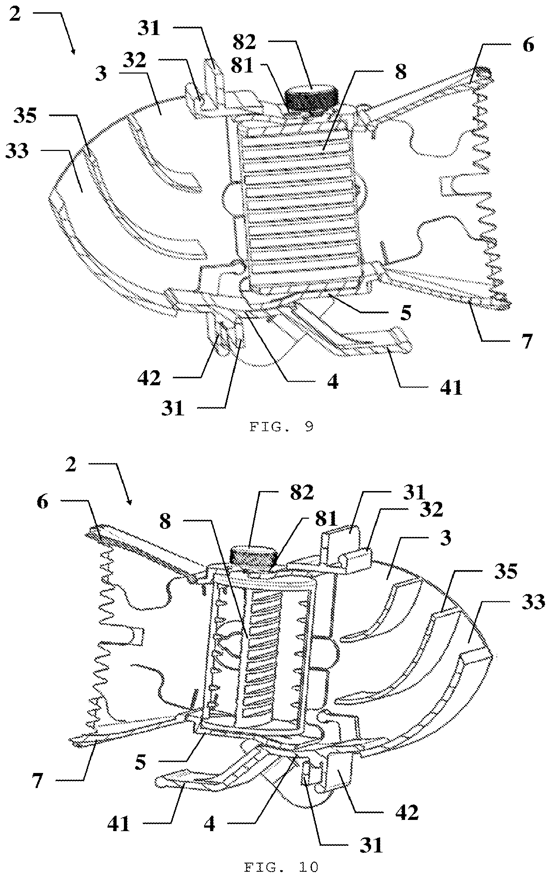

Tel que plus particulièrement visible aux figures 8-10, le boisseau 8 est rotatif autour d'un axe 81 engagé dans un logement pratiqué dans le pavillon 5. La figure 9 le présente en orientation ouverte/passante. La figure 10 le présente en orientation fermée/bloquante. Ici le réglage et le maintien en position sont réalisés de manière continue. Une vis 82 en relation avec une rainure circulaire couvrant 45° permet un blocage par serrage. La vis 82 sert avantageusement encore de manoeuvre extériorisée du boisseau 8.

Il a été vu plusieurs moyens de blocage d'un réglage : en continu, en positions discrètes et au moyen d'un indexage, d'un clipsage, ou d'un serrage. Il va de soi que tous ces moyens de blocage et/ou réglage sont donnés à titre illustratif et sont interchangeables.

Dans le domaine de la pulvérisation il existe principalement deux modes de dispersion du produit phytosanitaire au moyen de l'air propulseur apporté par la buse 2 : un mode dit « pneumatique » et un mode dit « jet porté ».

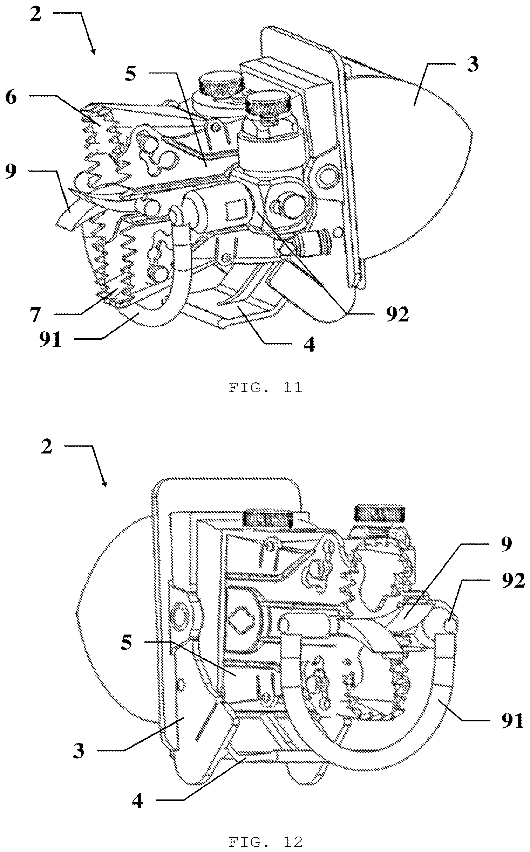

Les figures 11 et 12 illustrent une buse 2 configurée en mode pneumatique. Dans le mode pneumatique le produit phytosanitaire est mélangé à l'air propulseur au moyen d'un organe appelé éclateur 9. Un tel éclateur 9 comprend une sortie de produit phytosanitaire et une ou deux ailes de dispersion. L'éclateur 9 doit préférentiellement être disposé dans le flux d'air propulseur en sortie de la buse 2.

Pour cela, selon une caractéristique, une buse 2 comprend un moyen de fixation 52, sous la forme d'une encoche pratiquée dans l'ouverture du pavillon 5, apte à permettre le montage, typiquement par clipsage, d'un éclateur 9. Afin de réaliser la connexion d'un éclateur 9 au réseau de distribution de produit phytosanitaire 13, il convient d'intercaler un bloc de distribution 92. Ce bloc de distribution 92 est connecté au réseau de distribution de produit phytosanitaire 13 par une canalisation (non représentée) et connecté à l'éclateur 9 par une durite 91. La buse comprend avantageusement sur une ou deux de ses faces une interface de montage 53, par exemple du type à verrouillage quart de tour. Cette interface de montage 53 est avantageusement utilisée pour monter le bloc de distribution 92 directement sur la buse 2 au plus près de l'éclateur 9.

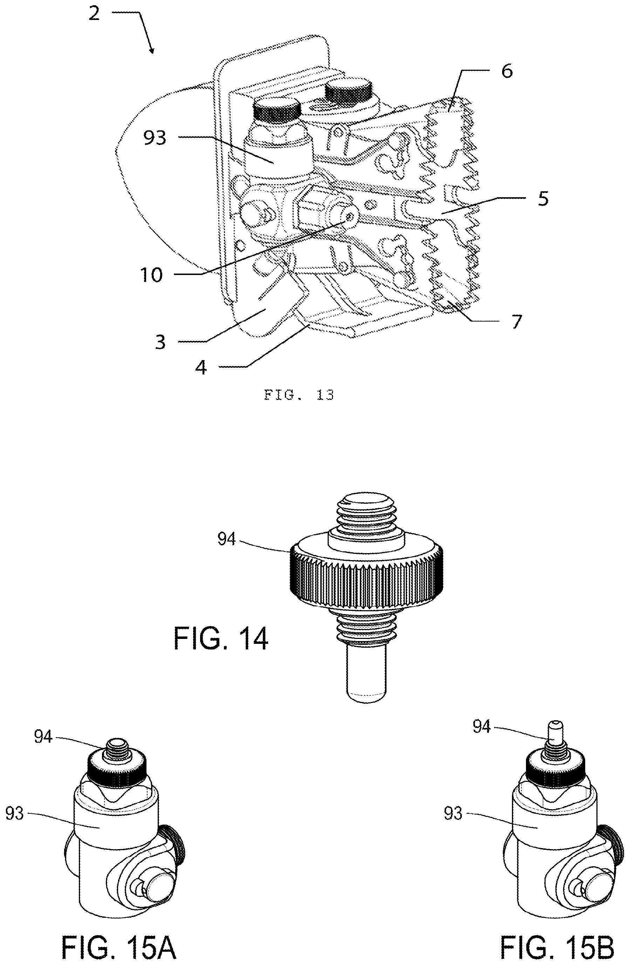

La figure 13 illustre une buse 2 configurée en mode jet porté. Dans le mode jet porté le produit phytosanitaire est directement pulvérisé, sous pression, par un gicleur 10. Le brouillard ainsi produit est ensuite soufflé par l'air propulseur vers la cible. Le gicleur 10 est préférentiellement disposé décalé latéralement relativement au flux d'air propulseur sortant de la buse 2.

Pour cela, selon une caractéristique, une buse 2 comprend un moyen de fixation 53, d'un gicleur 10 ou d'un bloc support 93 qui assure le support du gicleur 10 et la connexion au réseau de distribution de produit phytosanitaire 13. La buse comprend avantageusement sur une ou deux de ses faces un tel moyen de fixation 53, par exemple du type à verrouillage quart de tour. Ce moyen de fixation 53 est avantageusement le même que celui utilisé pour monter le bloc de distribution 92 de l'éclateur 9. Le bloc support 93/gicleur 10 est monté à gauche ou à droite de la buse 2, en fonction du sens de déplacement de la buse 2 relativement aux végétaux.

Ainsi la buse 2 selon l'invention présente une grande versatilité en ce qu'elle est compatible des deux modes de pulvérisation : pneumatique ou et porté.

La buse 2 est avantageusement réalisée en matière plastique. Elle peut être obtenue par moulage ou par technologie additive.

La buse 2 peut encore, en fonction des besoins, être réalisée dans plusieurs tailles.

Selon une caractéristique avantageuse, toutes les parties de la buse 2, plus particulièrement visibles sur l'éclaté de la figure 8, sont à l'instar de la buse 2 elle-même, conçues pour être montables et démontables manuellement, en utilisant l'élasticité du matériau plastique, le cas échéant augmentée par des découpes. Le montage/démontage s'effectue avantageusement sans outillage.

Selon une autre caractéristique avantageuse, telle qu'illustrée sur les figures, la buse 2 est conçue telle que toutes ses parties soient détrompées afin de ne pouvoir se monter que d'une façon et une seule.

Selon une autre caractéristique les petites pièces, notamment les vis sont imperdables, grâce à une couronne clipsable disposée sur leur tige prolongée au-delà du filetage.

Selon une autre caractéristique, les différentes vis, vis 81 du boisseau 8 et les vis du bloc de distribution 92 et du bloc support 93 sont identiques afin de réduire le nombre de pièces de rechange.

Selon une configuration avantageuse, le bloc support 93 qu'il s'agisse du support du gicleur 10 ou du support interfaçant le bloc de distribution 92 avec l'éclateur 9 (comme illustré sur la figure 11 par exemple) permettant la connexion au réseau de distribution de produit phytosanitaire 13, comprend une vis de fermeture 94, cette vis 94 permettant la fermeture, notamment manuelle, de l'arrivée de liquide à pulvériser.

Comme illustré en référence aux figure 14, 15 et 15B, cette vis de fermeture 94 est réversible entre deux positions : cette vis comprend en particulier une molette centrale d'où s'étend :
- d'un premier côté, une première tige filetée relativement courte permettant son vissage au bloc support 93, et
- d'un autre côté, opposé au premier côté, une seconde tige filetée prolongée d'une tête formant une tige relativement longue, permettant d'une part le vissage au bloc support 93 et la fermeture de l'arrivée de liquide à pulvériser dans le bloc support 93.

De cette manière, lorsque la première tige est visible et saillante à l'extérieure, la seconde tige est vissée dans le bloc support (voir la figure 15A) configuré pour venir appuyer contre un antigoutte et permettant de fermer la pulvérisation et inversement, lorsque la seconde tige est visible et saillante à l'extérieure, la première tige est vissée dans le bloc support (voir la figure 15A) permettant l'ouverture de la pulvérisation et tout en laissant la vis 94 fixée sur la buse 2.

Selon un mode de réalisation avantageux, au moins un parmi les éléments mobiles que sont le pavillon 5, le volet 6, le volet 7, moyen d'obturation 8, est commandé par un actionneur. Un tel actionneur peut être de tout type, tel qu'électrique ou pneumatique.

Ceci permet une commande à distance et/ou automatique. Une telle commande est typiquement interfacée par une unité de traitement, de type processeur.

Une commande à distance peut permettre à un opérateur, typiquement depuis la cabine du matériel agricole, ou encore, de configurer la ou les buse(s) 2 en fonction de la conformation des végétaux que l'opérateur connaît ou observe, le cas échéant en roulage pendant une pulvérisation. L'interface opérateur / unité de traitement peut être intégrée tel un clavier ou une souris, ou encore au moyen d'un appareil connecté tel un téléphone ou une tablette. Ainsi, dans le cas d'une végétation dense l'opérateur pourra préférer une pénétration en profondeur des produits phytosanitaires et donc régler les volets 6, 7 en position fermée afin d'avoir une ouverture réduite de la buse 2.

Une commande automatique peut permettre de réaliser une configuration de la ou les buse(s) en fonction d'une configuration mémorisée ou encore en fonction d'une observation automatique de l'environnement et/ou des végétaux. Ainsi, des capteurs observant les végétaux peuvent permettre de modifier en conséquence la configuration des buses en fonction des résultats de l'observation. Les capteurs peuvent être de tout type, y compris un système de traitement d'image.

Ainsi, en fonction d'une présence / absence de végétation en regard d'une buse, il peut être commandé une ouverture / fermeture du boisseau. En fonction d'une distance mesurée aux végétaux, l'ouverture des volets 6, 7 peut être modifiée, afin de favoriser l'homogénéité de la dispersion du produit phytosanitaire.

## Revendications

1. Dispositif de pulvérisation pour machine agricole, comprenant un porteur (1) et au moins une buse (2) apte à pulvériser un produit aérosol, le porteur (1) étant creux afin d'être apte à transporter un air propulseur jusqu'à ladite au moins une buse (2), ladite au moins une buse (2) étant sélectivement montable et démontable du porteur (1), dans lequel le porteur (1) comprend au moins un trou (11) découpé dans sa paroi, et dans lequel ladite au moins une buse (2) comprend un manchon (3) apte à être engagé dans ledit au moins un trou (11), et une collerette (31) entourant le manchon (3) et apte à recouvrir la périphérie extérieure du trou (11), ledit dispositif étant **caractérisé en ce que** la buse (2) comprend au moins deux ergots (32,42) débordant radialement du manchon (3) de manière à pouvoir crocheter/engager la périphérie intérieure du trou (11), un desdits au moins deux ergots (32) étant fixe et un autre desdits au moins deux ergots (42) étant mobile entre une position crochetée où il peut crocheter la périphérie intérieure du trou (11) et une position escamotée, le changement de position étant réalisable au moyen d'un levier (4) comprenant une manoeuvre (41).

2. Dispositif selon la revendication **1,** dans lequel la manoeuvre (41) est disposée à l'extérieur et/ou la buse (2) est sélectivement montable et démontable du porteur (1) sans outillage.

3. Dispositif selon la revendication **1** ou **2,** où la buse forme un ensemble configuré pour assurer un mélange d'un produit phytosanitaire avec l'air propulseur pour former un aérosol, cet ensemble étant amovible d'un seul tenant par rapport au porteur (11).

4. Dispositif selon l'une quelconque des revendications **1** à **3,** où le manchon (3) comprend une écope (33) faisant face à l'arrivée d'air propulseur et forme un coude entre l'écope (33) et la collerette (31).

5. Dispositif selon l'une quelconque des revendications **1** à **4,** où le porteur (1) comprend une augmentation (12) de section transverse autour d'un trou (11).

6. Dispositif selon l'une quelconque des revendications **1** à **5,** où la buse (2) comprend encore un pavillon (5), disposé dans la continuité du manchon (3) et articulé relativement au manchon (3).

7. Dispositif selon la revendication **6,** dans lequel le pavillon (5) est articulé relativement au manchon (3) selon un axe horizontal (51).

8. Dispositif selon la revendication **6** ou la revendication **7,** où le pavillon (5) comprend encore au moins un volet (6, 7) articulé de manière à varier l'ouverture du pavillon (5).

9. Dispositif selon la revendication **8,** où le pavillon (5) comprend deux volets (6, 7).

10. Dispositif selon la revendication **8** ou la revendication **9,** dans lequel chaque volet (6, 7) est indépendamment réglable, et/ou l'axe d'articulation (61, 71) de l'au moins un volet (6, 7) est horizontal et/ou les deux volets (6, 7) sont symétriques.

11. Dispositif selon l'une quelconque des revendications **1** à **10,** où la buse (2) comprend encore un moyen d'obturation (8) réglable.

12. Dispositif selon l'une quelconque des revendications **6** à **10** et la revendication **11,** où le moyen d'obturation comprend un boisseau rotatif (8) disposé dans le pavillon (5).

13. Dispositif selon la revendication **12,** dans lequel le boisseau rotatif (8) est cylindrique et/ou d'axe (81) vertical.

14. Dispositif selon l'une quelconque des revendications **6** à **10** ou l'une quelconque des revendications **6** à **10** et la revendication **11** ou **12** ou **13,** où la buse (2) comprend encore un moyen de fixation (52) d'un éclateur (9) dans l'ouverture du pavillon (5) et/ou un moyen de fixation (53) d'un gicleur (10) à côté de l'ouverture du pavillon (5).

## Patentansprüche

1. Sprühvorrichtung für eine landwirtschaftliche Maschine, umfassend einen Träger (1) und mindestens eine Düse (2), die geeignet ist, ein Aerosolprodukt zu versprühen, wobei der Träger (1) hohl ist, um geeignet zu sein, eine Treibluft bis zu der mindestens einen Düse (2) zu befördern, wobei die mindestens eine Düse (2) selektiv am Träger (1) montierbar und demontierbar ist, wobei der Träger (1) mindestens ein Loch (11) aufweist, das in seine Wand geschnitten ist, und wobei die mindestens eine Düse (2) eine Hülse (3) aufweist, die in das mindestens eine Loch (11) eingreifen kann, und einen Kragen (31), der die Hülse (3) umgibt und geeignet ist, den Außenumfang des Lochs (11) zu bedecken, wobei die Vorrichtung **dadurch gekennzeichnet ist, dass** die Düse (2) mindestens zwei Nasen (32, 42) umfasst, die radial von der Hülse (3) vorstehen, so dass sie in den Innenumfang des Lochs (11) einhaken/eingreifen können, wobei eine der mindestens zwei Nasen (32) feststehend ist und eine andere der mindestens zwei Nasen (42) zwischen einer eingehakten Position, in der sie in den Innenumfang des Lochs (11) einhaken kann, und einer eingezogenen Position beweglich ist, wobei die Änderung der Position mittels eines Hebels (4), der ein Betätigung (41) umfasst, durchführbar ist.

2. Vorrichtung nach Anspruch 1, wobei die Betätigung (41) außen angeordnet ist und/oder die Düse (2) selektiv ohne Werkzeug am Träger (1) montierbar und demontierbar ist.

3. Vorrichtung nach Anspruch 1 oder 2, wobei die Düse eine Einheit bildet, die ausgelegt ist, um eine Mischung eines Pflanzenschutzmittels mit der Treibluft zu sichern, um ein Aerosol zu bilden, wobei diese Einheit in einem Stück in Bezug auf den Träger (11) abnehmbar ist.

4. Vorrichtung nach einem der Ansprüche 1 bis 3, wobei die Hülse (3) einen Schöpfer (33) umfasst, der der Treibluftzufuhr gegenüberliegt und ein Knie zwischen dem Schöpfer (33) und dem Kragen (31) bildet.

5. Vorrichtung nach einem der Ansprüche 1 bis 4, wobei der Träger (1) eine Querschnittszunahme (12) um ein Loch (11) herum umfasst.

6. Vorrichtung nach einem der Ansprüche 1 bis 5, wobei die Düse (2) weiterhin einen Trichter (5) umfasst, der in Fortsetzung der Hülse (3) angeordnet und relativ zur Hülse (3) angelenkt ist.

7. Vorrichtung nach Anspruch 6, wobei der Trichter relativ zur Hülse (3) gemäß einer horizontalen Achse angelenkt ist.

8. Vorrichtung nach Anspruch 6 oder Anspruch 7, wobei der Trichter (5) weiterhin mindestens eine Klappe (6, 7) umfasst, die so angelenkt ist, dass die Öffnung des Trichters (5) variierbar ist.

9. Vorrichtung nach Anspruch 8, wobei der Trichter (5) zwei Klappen (6, 7) umfasst.

10. Vorrichtung nach Anspruch 8 oder Anspruch 9, wobei jede Klappe (6, 7) unabhängig einstellbar ist, und/oder die Gelenkachse (61, 71) der mindestens einen Klappe (6, 7) horizontal ist und/oder die beiden Klappen (6, 7) symmetrisch sind.

11. Vorrichtung nach einem der Ansprüche 1 bis 10, wobei die Düse (2) weiterhin ein einstellbares Verschlussmittel (8) umfasst.

12. Vorrichtung nach einem der Ansprüche 6 bis 10 und Anspruch 11, wobei das Verschlussmittel einen Drehschieber (8) umfasst, der in dem Trichter (5) angeordnet ist.

13. Vorrichtung nach Anspruch 12, wobei der Drehschieber (8) zylindrisch ist und/oder eine vertikale Achse (81) hat.

14. Vorrichtung nach einem der Ansprüche 6 bis 10 oder einem der Ansprüche 6 bis 10 und Anspruch 11 oder 12 oder 13, wobei die Düse (2) weiterhin ein Mittel zum Befestigen (52) eines Aufbrechers (9) in der Öffnung des Trichters (5) und/oder ein Mittel zum Befestigen (53) einer Spritzdüse (10) neben der Öffnung des Trichters (5) umfasst.

## Claims

1. Spraying device for agricultural machine, comprising a carrier (1) and at least one nozzle (2) suitable for spraying an aerosol product, the carrier (1) being hollow so as to be suitable for transporting a propellant air to said at least one nozzle (2) said at least one nozzle (2) being selectively mountable and dismountable in respect of the carrier (1), wherein the carrier (1) comprises at least one hole (11) cut out in its wall, and wherein said at least one nozzle (2) comprises a sleeve (3) suitable for being engaged in said at least one hole (11), and a flange (31) surrounding the sleeve (3) and suitable for covering the outer periphery of the hole (11), said device being **characterized in that** the nozzle (2) comprises at least two tappets (32,42) protruding radially from the sleeve (3) so as to be able to hook/engage the inner periphery of the hole (11), one of said at least two tappets (32) being fixed and the other of said at least two tappets (42) being movable between a hooked position where it can hook the inner periphery of the hole (11) and a retracted position, the change of position being possible by means of a lever (4) comprising a maneuver (41).

2. Device according to claim 1, wherein the maneuver (41) is disposed outside and/or the nozzle (2) is selectively mountable and dismountable in respect of the carrier (1) without tools.

3. Device according to claim 1 or 2, where the nozzle forms an assembly configured to mix a phytosanitary product with the propellant air to form an aerosol, this assembly being removable in one piece in relation to the carrier (11).

4. Device according to any one of claims 1 to 3, where the sleeve (3) comprises a scoop (33) facing the propellant air supply and forms a bend between the scoop (33) and the flange (31).

5. Device according to any one of claims 1 to 4, where the carrier (1) comprises an increase (12) in cross-section around a hole (11).

6. Device according to any one of claims 1 to 5, where the nozzle (2) further comprises a housing (5), disposed extending from the sleeve (3) and hinged in relation to the sleeve (3).

7. Device according to claim 6, wherein the housing (5) is hinged relative to the sleeve (3) along a horizontal axis (51).

8. Device according to claim 6 or to claim 7, where the housing (5) further comprises at least one hinged flap (6, 7) so as to vary the opening of the housing (5)

9. Device according to claim 8, where the housing (5) comprises two flaps (6, 7).

10. Device according to claim 8 or to claim 9, wherein each flap (6, 7) is independently adjustable, and/or the hinge axis (61, 71) of the at least one flap (6, 7) is horizontal and/or the two flaps (6, 7) are symmetrical.

11. Device according to any one of claims 1 to 10, where the nozzle (2) further comprises an adjustable shutter means (8).

12. Device according to any one of claims 6 to 10 and to claim 11, where the shutter means comprises a rotary valve (8) disposed in the housing (5).

13. Device according to claim 12, wherein the rotary valve (8), is cylindrical and/or of vertical axis (81).

14. Device according to any one of claims 6 to 10 or to any one of claims 6 to 10 and to claim 11 or 12 or 13, where the nozzle (2) further comprises a fastening means (52) of a discharger (9) in the opening of the housing (5) and/or a fastening means (53) of a sprinkler (10) next to the opening of the housing (5).
